# EUROPEAN PATENT APPLICATION

(11) **EP 4 089 138 A1**
(43) Date of publication of application: **16.11.2022**
(21) Application number: 20912128.4
(22) Date of filing: 07.01.2020
(51) Int. Cl.: C08J 3/12, C08K 5/10, C08L 67/02

(54) **POLYBUTYLENE TEREPHTHALATE RESIN PELLET HAVING IMPROVED METERABILITY**

(71) Applicant: Polyplastics Co., Ltd., Tokyo 108-8280 (JP)
(72) Inventor: SAITO, Itsuki, Fuji-shi, Shizuoka 416-8533 (JP); GOSHIMA, Kazuya, Fuji-shi, Shizuoka 416-8533 (JP); SEKIGUCHI, Dai, Fuji-shi, Shizuoka 416-8533 (JP); ARAKI, Kazuhiro, Fuji-shi, Shizuoka 416-8533 (JP)
(74) Representative: Winter, Brandl - Partnerschaft mbB
(86) International application number: PCT/JP2020/000121
(87) International publication number: WO 2021/140558

(57) **Abstract**

[Problem] The present invention addresses the problem of providing a polybutylene terephthalate resin with improved meterability, capable of shortening the "measurement time" to measure one shot of molten resin in a cylinder when obtaining a molded article from a polybutylene terephthalate resin by performing injection molding.

[Solution] The abovementioned problem is solved by a polybutylene terephthalate resin pellet including a lubricant, wherein the amount of the lubricant leached to the pellet surface is set to a specific range.

## Description

### TECHNICAL FIELD

The present invention pertains to a polybutylene terephthalate resin pellet having improved meterability.

### BACKGROUND ART

Polybutylene terephthalate resins (PBT resins) have various excellent properties such as mechanical properties, electrical properties, and thermal resistance and are therefore widely used as engineering plastics in diverse applications such as automotive components and electrical/electronic device components.

Injection molding is an example of a method for obtaining a molded article from a polybutylene terephthalate resin. As methods to increase productivity, that is, the quantity produced per unit time in injection molding, there are methods for increasing the number of molded articles obtained per shot by increasing the number of cavities per mold. Conversely, methods for increasing the number of shots per unit time by shortening the molding cycle time per shot are also effective.

Here, in shortening the molding cycle time, there are methods for lowering the temperature of the mold to shorten the cooling time and methods for increasing the injection rate to shorten the injection time. However, there are concerns that shortening the cooling time is connected not only to insufficient crystallization of molded articles, but to deterioration of physical properties, and injection at high speeds can also be the cause of poor external appearance due to jetting and gas burns. Thus, as a process with little effect on the properties of molded articles, shortening the "measurement time" to measure one shot of molten resin in a cylinder is a preferred method.

### SUMMARY OF THE INVENTION

### TECHNICAL PROBLEM

The present invention addresses the problem of providing a polybutylene terephthalate resin pellet with improved meterability, capable of shortening the "measurement time" to measure one shot of molten resin in a cylinder when injection molding a polybutylene terephthalate resin to obtain a molded article.

### SOLUTION TO PROBLEM

As a result of diligent investigation, the present inventors found that the abovementioned problem can be solved by a polybutylene terephthalate resin pellet comprising a lubricant, wherein the amount of the lubricant leached to the pellet surface is set to a specific range, completing the present invention. This sets a certain high and wide range for the amount of the lubricant leached, which has the benefit of not requiring the strict management of drying conditions as demanded when the amount of the lubricant leached is suppressed to within a low range and solves the problem of managing control of the leached amount of a lubricant becoming troublesome.

That is, the present invention pertains to (1)-(5) below.
(1) A polybutylene terephthalate resin pellet characterized by comprising a polybutylene terephthalate resin and a lubricant and by the infrared spectrum peak intensity derived from the lubricant with respect to the infrared spectrum peak intensity derived from the polybutylene terephthalate resin (absorption at 2850 cm⁻¹/absorption at 1019 cm⁻¹) after pre-drying and before loading in a molding machine being 0.080 or greater and 0.215 or less.
(2) The polybutylene terephthalate resin pellet described in (1), wherein, in a surface-crystallized state before pre-drying, the infrared spectrum peak intensity derived from the crystallized polybutylene terephthalate resin with respect to the infrared spectrum peak intensity derived from the entire polybutylene terephthalate resin (absorption at 917 cm⁻¹/absorption at 1019 cm⁻¹) is 0.200 or greater and 0.265 or less.
(3) The polybutylene terephthalate resin pellet described in (1) or (2), wherein the lubricant is a fatty acid ester.
(4) The polybutylene terephthalate resin pellet described in any of (1) to (3), wherein the temperature of the pellet immediately after strand cutting is 150°C or less.
(5) The polybutylene terephthalate resin pellet described in any of (1) to (4), wherein the polybutylene terephthalate resin pellet is free of an inorganic filler.

### EFFECTS OF INVENTION

According to the present invention, a polybutylene terephthalate resin pellet with improved meterability, capable of shortening the "measurement time" to measure one shot of molten resin in a cylinder when obtaining a molded article from a polybutylene terephthalate resin by performing injection molding can be provided.

### DESCRIPTION OF EMBODIMENTS

An embodiment of the present invention shall be explained in detail below. The present invention is not limited by the following embodiment and can be carried out with the addition of appropriate modifications so long as the effects of the present invention are not hindered.

### [Polybutylene Terephthalate Resin Pellet]

The polybutylene terephthalate resin pellet of the present invention is characterized by comprising a polybutylene terephthalate resin and a lubricant and by the infrared spectrum peak intensity derived from the lubricant with respect to the infrared spectrum peak intensity derived from the polybutylene terephthalate resin (absorption of 2,850 cm⁻¹/absorption of 1,019 cm⁻¹) after pre-drying and before loading in a molding machine being 0.080 or greater and 0.215 or less.

In one embodiment of the present invention, the infrared spectrum peak intensity derived from the lubricant with respect to the infrared spectrum peak intensity derived from the polybutylene terephthalate resin (absorption at 2850 cm⁻¹/absorption at 1019 cm⁻¹) of the polybutylene terephthalate resin pellet after pre-drying and before loading in a molding machine is preferably 0.090 or greater and 0.200 or less and more preferably 0.100 or greater and 0.180 or less.

The infrared spectrum peak intensity derived from the crystallized polybutylene terephthalate resin with respect to the infrared spectrum peak intensity derived from the entire polybutylene terephthalate resin (absorption at 917 cm⁻¹/absorption at 1019 cm⁻¹) of the polybutylene terephthalate resin pellet of the present invention, in a surface-crystallized state before pre-drying, is preferably 0.200 or greater and 0.265 or less, more preferably 0.205 or greater and 0.260 or less, and still more preferably 0.210 or greater and 0.250 or less.

Moreover, the lubricant used in the polybutylene terephthalate resin pellet of the present invention is preferably a fatty acid ester.

Furthermore, the temperature of the polybutylene terephthalate resin pellet of the present invention immediately after strand cutting is preferably 150°C or less, more preferably 130°C or less, still more preferably 110°C or less, especially preferably 100°C or less, and most preferably 90°C or less. The lower limit for the pellet temperature immediately after strand cutting is not particularly limited, but in cases in which the pellet temperature is made extremely low, a cooling process on the strand must be applied for longer and disposition of the equipment, etc. becomes complicated, so the pellet temperature is preferably 40°C or greater, more preferably 50°C or greater, and still more preferably 60°C or greater. The pellet temperature immediately after strand cutting in the present invention refers to a value measured by gathering, in a container capable of collecting the pellets in a state sufficiently close to one another such that the pellets do not cool, about 1 kg of pelletized pellets immediately after being strand cut and measuring near the central portion of the container filled with pellets with a contact thermometer.

Further, the polybutylene terephthalate resin pellet of the present invention preferably does not contain an inorganic filler.

### (Polybutylene Terephthalate Resins)

Polybutylene terephthalate resins (PBT resins) are obtained by polycondensing a dicarboxylic acid component comprising at least terephthalic acid or an ester-forming derivative thereof (a C₁₋₆ alkylester, an acid halide, etc.) and a glycol component comprising an alkylene glycol with at least 4 carbon atoms (1,4-butanediol) or an ester-forming derivative thereof (an acetylate, etc.). In the present embodiment, the polybutylene terephthalate resin is not limited to homopolybutylene terephthalate resins and may be a copolymer containing 60 mol% or greater butylene terephthalate units.

The amount of terminal carboxyl groups of the polybutylene terephthalate resin is not particularly limited so long as the objective of the present invention is not hindered but is preferably 30 meq/kg or less and more preferably 25 meq/kg or less.

The intrinsic viscosity of the polybutylene terephthalate resin is not particularly limited so long as the objective of the present invention is not hindered, but is preferably 0.60 dL/g or greater and 1.2 dL/g or less and more preferably 0.65 dL/g or greater and 0.9 dL/g or less. When a polybutylene terephthalate resin with an intrinsic viscosity in such a range is used, the obtained polybutylene terephthalate resin composition has particularly excellent moldability. Further, the intrinsic viscosity can be adjusted by blending polybutylene terephthalate resins having different intrinsic viscosities. For example, by blending a polybutylene terephthalate resin having an intrinsic viscosity of 1.0 dL/g with a polybutylene terephthalate resin having an intrinsic viscosity of 0.7 dL/g, a polybutylene terephthalate resin having an intrinsic viscosity of 0.9 dL/g can be prepared. The intrinsic viscosity of the polybutylene terephthalate resin can be measured under conditions of, for example, a temperature of 35°C in o-chlorophenol.

In preparing the polybutylene terephthalate resin, when using an aromatic dicarboxylic acid other than terephthalic acid or an ester-forming derivative thereof as a comonomer component, for example, a C₈₋₁₄ aromatic dicarboxylic acid such as isophthalic acid, phthalic acid, 2,6-naphthalenedicarboxylic acid, or 4,4'-dicarboxydiphenylether; a C₄₋₁₆ alkanedicarboxylic acid such as succinic acid, adipic acid, azelaic acid, or sebacic acid; a C₅₋₁₀ cycloalkanedicarboxylic acid such as cyclohexanedicarboxylic acid; or an ester-forming derivative of these dicarboxylic acid components (a C₁₋₆ alkylester derivative, an acid halide, etc.) can be used. These dicarboxylic acid components may be used alone or in a combination of two or more.

Among these dicarboxylic acid components, a C₈₋₁₂ aromatic dicarboxylic acid such as isophthalic acid and a C₆₋₁₂ alkanedicarboxylic acid such as adipic acid, azelaic acid, or sebacic acid are more preferred.

In preparing the polybutylene terephthalate resin, when using a glycol component other than 1,4-butanediol as a comonomer component, for example, a C₂₋₁₀ alkylene glycol such as ethylene glycol, propylene glycol, trimethylene glycol, 1,3-butylene glycol, hexamethylene glycol, neopentyl glycol, or 1,3-octanediol; a polyoxyalkylene glycol such as diethylene glycol, triethylene glycol, or dipropylene glycol; an alicyclic diol such as cyclohexanedimethanol or hydrogenated bisphenol A; an aromatic diol such as bisphenol A or 4,4'-dihydroxybiphenyl; a C₂₋₄ alkylene oxide adduct of bisphenol A such as an ethylene oxide 2-mol adduct of bisphenol A or a propylene oxide 3-mol adduct of bisphenol A; or an ester-forming derivative of these glycols (an acetylate, etc.) can be used. These glycol components may be used alone or in a combination of two or more.

Among these glycol components, a C₂₋₆ alkylene glycol such as ethylene glycol or trimethylene glycol, a polyoxyalkylene glycol such as diethylene glycol, an alicyclic diol such as cyclohexanedimethanol, etc. is more preferred.

As comonomer components that can be used beyond the dicarboxylic acid component and the glycol component, there are, for example, aromatic hydroxycarboxylic acids such as 4-hydroxybenzoic acid, 3-hydroxybenzoic acid, 6-hydroxy-2-naphthoic acid, and 4-carboxy-4'-hydroxybiphenyl; aliphatic hydroxycarboxylic acids such as glycolic acid and hydroxycaproic acid; C₃₋₁₂ lactones such as propiolactones, butyrolactones, valerolactones, and caprolactones (ε-caprolactone, etc.); and ester-forming derivatives of these comonomer components (C₁₋₆ alkylester derivatives, acid halides, acetylates, etc.).

The content of the polybutylene terephthalate resin is preferably 10-90% by mass of the total mass of the polybutylene terephthalate resin pellet, more preferably 20-80% by mass, and still more preferably 30-70% by mass.

### (Lubricant)

The polybutylene terephthalate resin pellet of the present invention contains a lubricant. Examples of lubricants include fatty acids, fatty acid metal salts, hydroxy-fatty acids, paraffins, low-molecular-weight polyolefins, fatty acid amides, aliphatic ketones, partially saponified fatty acid esters, fatty acid lower alcohol esters, fatty acid polyalcohol esters, fatty acid polyglycol esters, modified silicones, etc.

The content of the lubricant is not particularly limited if the infrared spectrum peak intensity derived from the lubricant with respect to the infrared spectrum peak intensity derived from the polybutylene terephthalate resin (absorption at 2850 cm⁻¹/absorption at 1019 cm⁻¹) of the polybutylene terephthalate resin after pre-drying and before loading in a molding machine is 0.080 or greater and 0.215 or less, but the content is preferably 0.05-0.5% by mass of the total mass of the polybutylene terephthalate resin pellet, more preferably 0.10-0.40% by mass, and still more preferably 0.15-0.30% by mass.

Fatty acids with 6-40 carbon atoms are preferable as the fatty acid and specifically, examples thereof include oleic acid, stearic acid, lauric acid, hydroxystearic acid, behenic acid, arachidonic acid, linolic acid, linolenic acid, ricinoleic acid, palmitic acid, montanic acid, mixtures of these, etc. As fatty acid metal salts, alkali metal salts and alkali earth metal salts of fatty acids with 6-40 carbon atoms are preferred and specifically, examples thereof include calcium stearate, sodium montanate, calcium montanate, etc.

Examples of hydroxy-fatty acids include 1,2-hydroxystearic acid, etc. As paraffins, those with 18 or more carbon atoms are preferred and examples thereof include liquid paraffins, natural paraffins, microcrystalline waxes, petrolactums, etc.

As low-molecular-weight polyolefins, for example, those with a molecular weight of 5,000 or less are preferred and specifically, examples thereof include polyethylene waxes, maleic acid-modified polyethylene waxes, oxidized-type polyethylene waxes, chlorinated polyethylene waxes, polypropylene waxes, etc.

As fatty acid amides, those with 6 or more carbon atoms are preferred and specifically, examples thereof include oleic acid amide, erucic acid amide, behenic acid amide, methylene bisstearic acid amide, N,N-bis(2-hydroxyethyl)stearic acid amide, etc.

As aliphatic ketones, those with 6 or more carbon atoms are preferred and examples thereof include higher aliphatic ketones, etc.

Examples of partially saponified fatty acid esters include partially saponified montanic acid esters, etc.

Examples of fatty acid lower alcohol esters include stearic acid esters, oleic acid esters, linolic acid esters, linolenic acid esters, adipic acid esters, behenic acid esters, arachidonic acid esters, montanic acid esters, isostearic acid esters, etc. These may also be mixed esters using multiple fatty acids and/or lower alcohols.

Examples of fatty acid polyalcohol esters include (poly)glycerine tristearate, (poly)glycerine distearate, (poly)glycerine monostearate, (poly)pentaerythritol tetrastearate, (poly)pentaerythritol tristearate, (poly)pentaerythritol distearate, (poly)pentaerythritol monostearate, (poly)pentaerythritol adipate stearate, behenic acid sorbitan esters, etc. These may also be mixed esters using multiple fatty acids and/or polyalcohols.

Examples of fatty acid polyglycol esters include fatty acid polyethylene glycol esters, fatty acid polypropylene glycol esters, etc.

Examples of modified silicones include polyether-modified silicones, higher fatty acid alkoxy-modified silicones, higher fatty acid-containing silicones, higher fatty acid ester-modified silicones, methacrylic-modified silicones, fluorine-modified silicones, etc.

Examples of preferred lubricants include, e.g., fatty acid metal salts, low-molecular-weight polyolefins, fatty acid amides, partially saponified fatty acid esters, fatty acid lower alcohol esters, fatty acid polyalcohol esters, etc. Among these, low-molecular-weight polyolefins, fatty acid polyalcohol esters, and fatty acid amides are more preferable. Within these, polyethylene waxes, adipic acid esters, montanic acid esters, behenic acid esters, stearic acid esters, fatty acid glycerine esters, fatty acid pentaerythritol esters, fatty acid trimethylolpropane esters, fatty acid sorbitan esters, and ethylene bisstearic acid amides are still more preferable, and mixed esters of trimethylolpropane, montanic acid, and adipic acid, stearic acid glycerine esters, behenic acid glycerine esters, and stearic acid pentaerythritol esters are especially preferable.

### (Filler)

A filler is used, as necessary, in the polybutylene terephthalate resin pellet of the present invention. Such a filler is preferably blended in order to obtain excellent properties in performance such as mechanical strength, thermal resistance, dimensional stability, and electrical properties and is particularly effective for the purpose of increasing rigidity. In accordance with the objective, a fibrous, granular, or tabular filler is used.

Examples of fibrous fillers include glass fibers with round cross sections, asbestos fibers, carbon fibers, silica fibers, silica/alumina fibers, zirconia fibers, potassium titanate fibers, and further, metal fibrous materials such as stainless steel, aluminum, titanium, copper, and brass, etc. High-melting point organic fibrous substances such as fluorine resins and acrylic resins can also be used.

Examples of granular fillers include glass beads, glass powder, quartz powder, kaolin, clay, diatomaceous earth, wollastonite, iron oxide, titanium oxide, alumina, calcium carbonate, magnesium carbonate, calcium sulfate, and barium sulfate as well as silicon oxide, silicon nitride, various metal powders, etc.

Further, examples of tabular fillers include mica, glass flakes, various metal foils, etc.

The type of the filler is not particularly limited, and one or more types of filler can be added.

The amount of the filler added is not particularly specified, but is preferably 200 parts by mass or less with respect to 100 parts by mass of the polybutylene terephthalate resin pellet, more preferably 10 parts by mass or greater and 150 parts or less, and still more preferably 20 parts by mass or greater and 100 parts by mass or less. When the filler is added in excess, inferior moldability and decreases in toughness are observed.

### (Additives)

Publicly known substances that are commonly added to thermoplastic resins and the like can further be added and used in combination with the polybutylene terephthalate resin pellet of the present invention in accordance with the objective thereof. Any of, for example, an antioxidant, an ultraviolet absorbing agent, a stabilizer such as a photostabilizer, an anti-static agent, a mold release agent, a nucleating agent (talc, etc.), a colorant such as a dye or pigment (carbon black, etc.), a plasticizing agent, a fluidity-improving agent, a toughness-improving agent, a hydrolysis resistance-improving agent (epoxy, carbodiimide, etc.) and an auxiliary agent thereof (potassium acetate, etc.), other resins, etc. can be blended.

The content of the additive is not particularly limited, but when another resin is added, the content is preferably 30% by mass or less of the total mass of the polybutylene terephthalate resin pellet, more preferably 1-20% by mass, and still more preferably 5-10% by mass. Further, when an additive other than another resin is added, the total amount thereof is preferably 0.05-10% by mass of the total mass of the polybutylene terephthalate resin pellet, more preferably 0.1-5% by mass, and still more preferably 0.5-3% by mass.

### (Examples)

The present invention will be explained specifically with the following examples, but the present invention is not limited by these examples so long as the gist thereof is not exceeded. Evaluation of the properties was performed with the following methods.

### (1) Evaluation of the amount of lubricant present on the pellet surface (amount of the lubricant leached)

Using a Hyperion 3000 manufactured by Bruker Japan K.K. as a measuring device, the irradiation area was set to 100 µm × 100 µm and infrared spectrum measurement was performed using 10 pellets of each of the examples and comparative examples obtained with the methods described below. The peak derived from the polybutylene terephthalate resin and the peak derived from the lubricant respectively correspond to those at 1019 cm⁻¹ and 2850 cm⁻¹ and the peak intensity derived from the lubricant with respect to the peak intensity derived from the polybutylene terephthalate resin (2850/1019) was determined. The results are shown in Tables 1-4.

### (2) Evaluation of the degree of surface crystallization of the pellet

Using a Hyperion 3000 manufactured by Bruker Japan K.K. as a measuring device, the irradiation area was set to 100 µm × 100 µm and infrared spectrum measurement was performed using 10 pellets of each of the examples and comparative examples obtained with the methods described below. The peak derived from the entire polybutylene terephthalate resin and the peak derived from the crystallized polybutylene terephthalate resin respectively correspond to those at 1019 cm⁻¹ and 917 cm⁻¹ and the peak intensity derived from the crystallized polybutylene terephthalate resin with respect to the peak intensity derived from the entire polybutylene terephthalate resin (917/1019) was determined. The results are shown in Tables 1-4.

### (3) Evaluation of measurability

After pre-drying pellets of each of the examples and comparative examples obtained with the methods described below at 140°C for the drying times (hr) shown in Tables 1-4, the variation in measurement time when molding 127 mm × 12.7 mm × 1.6 mm strip-shaped test pieces under the following molding conditions using a molding machine ("ROBOSHOT S-2000i 100B" manufactured by FANUC CORPORATION, screw diameter: ø 28 mm) was measured. 50 shots were performed, and the average measuring time was calculated as well as the standard deviation of the measuring time as variance (σ).

### [Molding Conditions]

Cylinder temperature: 260°C
Mold temperature: 60°C
Injection rate: 20 mm/sec
Hold pressure: 50 MPa
Measurement stroke: 21 mm
Screw revolution speed: 80 rpm
Back pressure: 3 MPa

Regarding the evaluation of measurability, those of Examples 1-10 and Comparative Examples 1-17 for which the measurement time was 4 seconds or less were considered "good" and those for which the measurement time exceeded 4 seconds were considered "poor". Further, for Examples 11-15 and Comparative Examples 18-22, which were produced with a mold different from that of Examples 1-10 and Comparative Examples 1-17, those for which the measurement time was 5 seconds or less were considered "good", those for which the measurement time exceeded 5 seconds and was 6 seconds or less were considered "fair", and those for which the measurement time exceeded 6 seconds were considered "poor".

### (4) Evaluation of handling

Glass beakers with a bottom surface inner diameter of 43 mm and a volume of 50 ml were filled level to the brim with the pellets of the examples and comparative examples obtained with the methods described below and heated for one hour at 180°C in a thermostatic tank. Next, the beakers were removed from the thermostatic tank and set in a room to cool to room temperature. Then, with a plate having a smooth, horizontal surface having been placed on the beakers and the plate and beakers flipped so the openings of the beakers faced downward, the beakers were gently lifted and the presence or absence of pellet sticking (adhesion) was confirmed visually. Pellets for which sticking was not observed were considered "good", those in which some sticking was observed were considered "fair", and those in which considerable sticking was observed were considered "poor".

### (5) Evaluation of physical properties

After drying the pellets of the examples and comparative examples obtained with the methods described below for three hours at 140°C, ISO 3167 Type 1A tensile test specimens (thickness: 4 mm) were molded with a resin temperature of 260°C and a mold temperature of 80°C and the tensile elongation (%) was measured in conformance with ISO 527-1 and 2. Those with a tensile elongation of 10% or greater were considered "good" and those with a tensile elongation less than 10% were considered "poor".

### (Pellet Manufacturing)

Materials in which the components shown in Tables 1-4 were dry blended in the compositions (% by mass) shown in the same were fed to the extruders shown in Tables 1-4, melt-kneaded with a cylinder temperature of 250°C at the immersion distances (cm), screw revolution speeds (rpm), and discharge amounts (kg/hr) shown in Tables 1-4 and the obtained pellets containing a polybutylene terephthalate resin and a lubricant were made into test pieces to be used in the evaluations described above. Here, the immersion distance indicates the length of the cooling water tank before a strand of the melt-kneaded material extruded from the die of an extruder is pelletized (cut). The longer the immersion distance, the more the strand cooling is accelerated and the lower the surface temperature at which the material is pelletized, so crystallization of the pellet surface does not readily progress, and the pellets have a low degree of surface crystallization. Further, a smaller discharge amount means a lower speed at which the strands are discharged and, even with the same cooling water tank length, the transit time increases and strand cooling is accelerated, so the degree of surface crystallization on the pellets is low. Normally, the higher the screw revolution speed the greater the extrusion amount. For the temperature of the pellets immediately after strand cutting in the present invention, 1 kg of the pelletized pellets of the examples and comparative examples immediately after strand cutting were gathered in a container in which the pellets are sufficiently close to one another and the temperature near the central portion thereof was measured with a contact thermometer. The results of the measurements are shown collectively as the pellet temperature (°C) in Tables 1-4. Here, the time required to gather 1 kg of pellets varies with the discharge amount, but because this varies on the order of several seconds to several minutes, decreases in temperature while gathering can be ignored.

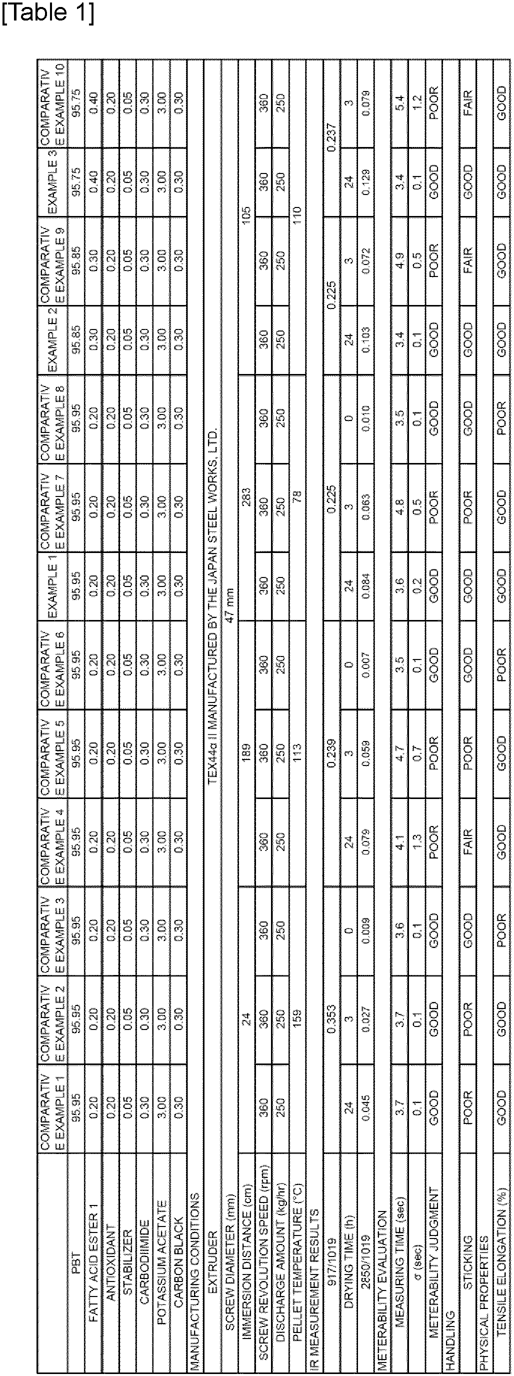

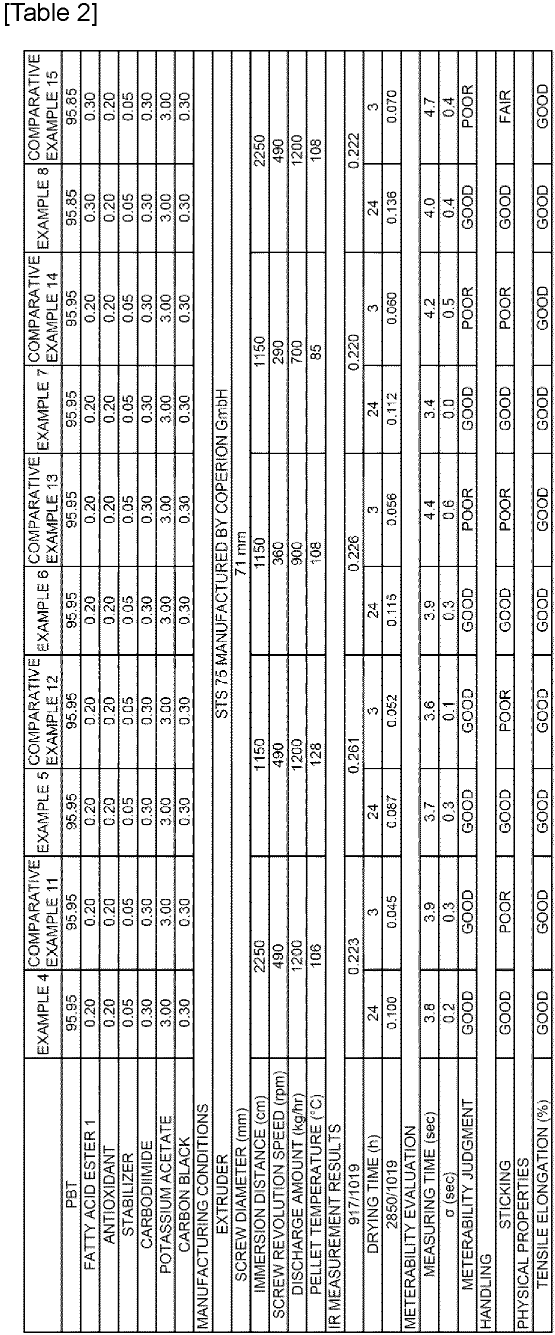

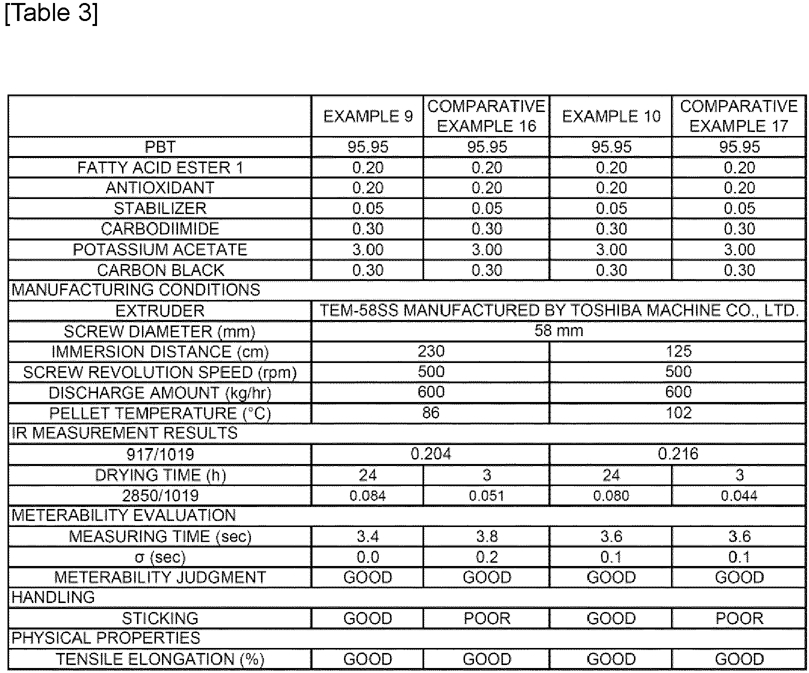

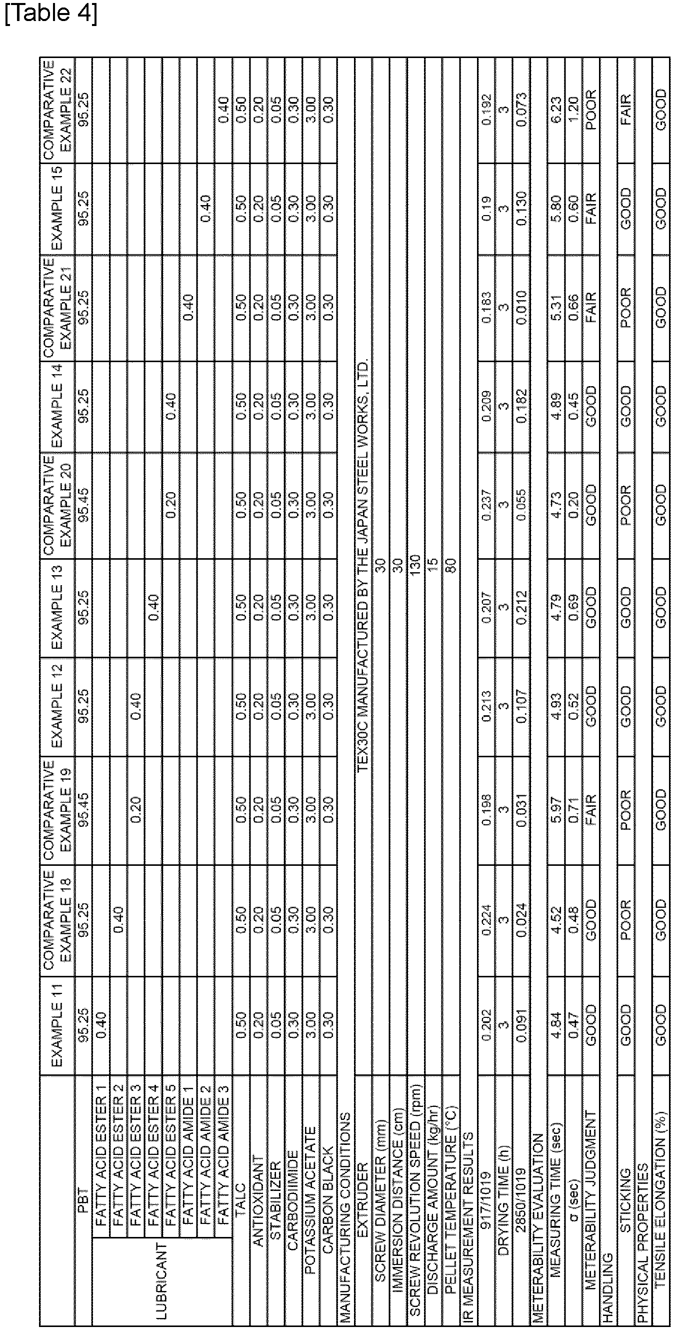

The details of the components described in Tables 1-4 are as follows.
PBT Resin: Polybutylene terephthalate resin with a terminal carboxyl group concentration of 20 meq/kg and an intrinsic viscosity of 0.84 dL/g manufactured by Polyplastics Co, Ltd.
Fatty Acid Ester 1: RIKEMAL B-74 manufactured by RIKEN VITAMIN CO., LTD.
Fatty Acid Ester 2: Licolub WE 40 manufactured by RIKEN VITAMIN CO., LTD.
Fatty Acid Ester 3: Licowax E manufactured by Clariant Japan K.K.
Fatty Acid Ester 4: Licocare RBW 300 TP manufactured by Clariant Japan K.K.
Fatty Acid Ester 5: Licocare RBW 102 TP manufactured by Clariant Japan K.K.
Aliphatic Amide 1: Light Amide WH-510K manufactured by KYOEISHA CHEMICAL Co., LTD.
Fatty Acid Amide 2: Light Amide WH-215 manufactured by KYOEISHA CHEMICAL Co., LTD.
Fatty Acid Amide 3: Light Amide WH-255 manufactured by KYOEISHA CHEMICAL Co., LTD.
Talc: Micron White #5000A manufactured by HAYASHI KASEI, CO., LTD.
Antioxidant: Irganox 1010 manufactured by BASF Japan Ltd.
Stabilizer: ADK STAB PEP-36 manufactured by ADEKA CORPORATION
Carbodiimide: Stabaxol P 400 manufactured by Rhein Chemie Japan Ltd.
Potassium Acetate: Masterbatch in which 0.1% by mass potassium acetate manufactured by FUJIFILM Wako Pure Chemical Corporation has been melt-kneaded in 99.9% by mass of the abovementioned PBT resin
Carbon Black: MA-600B manufactured by Mitsubishi Chemical Corporation

## Claims

1. A polybutylene terephthalate resin pellet comprising a polybutylene terephthalate resin and a lubricant, wherein the infrared spectrum peak intensity derived from the lubricant with respect to the infrared spectrum peak intensity derived from the polybutylene terephthalate resin (absorption at 2850 cm⁻¹/absorption at 1019 cm⁻¹) after pre-drying and before loading in a molding machine is 0.080 or greater and 0.215 or less.

2. The polybutylene terephthalate resin pellet according to claim 1, wherein, in a surface-crystallized state before pre-drying, the infrared spectrum peak intensity derived from the crystallized polybutylene terephthalate resin with respect to the infrared spectrum peak intensity derived from the entire polybutylene terephthalate resin (absorption at 917 cm⁻¹/absorption at 1019 cm⁻¹) is 0.200 or greater and 0.265 or less.

3. The polybutylene terephthalate resin pellet according to claim 1 or 2, wherein the lubricant is a fatty acid ester.

4. The polybutylene terephthalate resin pellet according to any one of claims 1 to 3, wherein the temperature of the pellet immediately after strand cutting is 150°C or less.

5. The polybutylene terephthalate resin pellet according to any one of claims 1 to 4, wherein the polybutylene terephthalate resin pellet is free of an inorganic filler.
